Europäisches Patentamt

European Patent Office

Office européen des brevets

(11) Publication number : **0 655 415 A1**

(12) # EUROPEAN PATENT APPLICATION

(21) Application number : **94402498.3**

(22) Date of filing : **04.11.94**

(51) Int. Cl.[6] : **C02F 1/00,** C02F 1/64,
C02F 3/24

(30) Priority : **30.11.93 KR 9326160**

(43) Date of publication of application :
**31.05.95 Bulletin 95/22**

(84) Designated Contracting States :
**DE FR GB**

(71) Applicant : **GOLDSTAR CO. LTD.**
**20, Yoido-Dong**
**Yongdungpo-Ku**
**Seoul (KR)**

(72) Inventor : **Hwang, Gui Nan**
**83, Buwon-Dong,**
**Kimhae**
**Kyungsangnam-Do (KR)**

(74) Representative : **Fort, Jacques**
**CABINET PLASSERAUD**
**84, rue d'Amsterdam**
**F-75440 Paris Cedex 09 (FR)**

(54) **Device for preparation and supply of hexagonal water.**

(57)   A device for preparation and supply of hexagonal water is disclosed. The device circulates the fresh water in an air and increases both hydrogen concentration (ph) and cation concentration ($H^+$) of the water, thus to readily prepare the potable hexagonal water which is good for the health. A fresh water reservoir (30) is connected to a hexagonal water reservoir (35) through a connection pipe (32). A water circulation pump (38) is placed in the interior of the hexagonal water reservoir. The pump circulates the water in the hexagonal water reservoir so as to make the water contact with the air and changes the water into the hexagonal water. The pump is controlled by a pump control unit (40) placed on the top of the hexagonal water reservoir.

F I G.2

EP 0 655 415 A1

## BACKGROUND OF THE INVENTION

Field of the Invention

The present invention relates in general to preparation and supply of hexagonal water and, more particularly, to a structural improvement in a hexagonal water preparation and supply device for more readily preparing and supplying the hexagonal water by circulating the fresh water in an air and by increasing both hydrogen concentration (ph) and cation concentration ($H^+$) of the fresh water.

Description of the Prior Art

Waters are generally classified in accordance with their molecular structures into several types, that is, water of hexagonal ring structure, water of pentagonal ring structure and water of five chain structure. General waters include therein all the above three molecular structures respectively. However, both the hexagonal ring structure and the pentagonal ring structure of the above three molecular structures are basic structures of waters.

It is noted that the above waters can be changed in their molecular structures by the ions resolved therein. For example, the ions, such as lithium (Li), sodium (Na), calcium (Ca), strontium (Sr), silver (Ag) and zinc (Zn), generate the hexagonal ring structures in the water. On the contrary, the ions, such as potassium (K), rubidium (Rb), magnesium (Mg), aluminum (Al), chlorine (Cl) and cesium (Cs), in the hexagonal water destruct the hexagonal ring structure of the water and change the molecular structure into the pentagonal ring structure.

When the water comes into contact with the air, carbon dioxide $CO_2$ of the water volatilizes into the air, so that the concentration of carbon dioxide $CO_2$ of the water is reduced, while the cation concentration ($H^+$) of the water is increased. At the same time, the hydrogen concentration ph of the water is increased. Therefore, the molecular structure of the water is changed into the hexagonal ring structure.

Generally, portable water include therein the hexagonal ring structure, the pentagonal ring structure and the five chain structure. The waters are different from each other in their healthful effects in accordance with ratio of the molecular structures included in the water. The waters are typically named by their majority structures of the three structures. For example, the water whose majority structure is the hexagonal ring stnlcture is named as the hexagonal molecular structure water or the hexagonal water, while the water whose majority structure is the pentagonal ring structure is named as the pentagonal molecular structure water or the pentagonal water. The hexagonal water has an excellent healthful effect on prevention of geriatric diseases such as cancers, constipation, diabetes and gastroenteric trouble. Meanwhile, the pentagonal water has an excellent effect on skin beauty and treatment of skin diseases. The pentagonal water is, therefore, not suitable for used as potable water, but suitable for used as skin moisturizing water.

The bio-water about healthy human cell comprises three layers, that is, a Z-layer directly hydrated into the human cell, an X-layer of ordinary water and a Y-layer interposed between the Z-layer and the X-layer. Of the above three layers of bio-water, the majority structure of the Z-layer directly hydrated into the human cell is the hexagonal ring structure, while the other layers, that is, the Y-layer and the X-layer, include pentagonal ring structure and five chain structure more than those of the Z-layer. Particularly, the waters about a diseased cell such as about a cancerous cell mainly include the water of pentagonal ring structure and the water of five chain structure. The molecular structures of the waters about the diseased cell are broken and free drift.

## SUMMARY OF THE INVENTION

It is, therefore, an object of the present invention to provide a device for preparation and supply of hexagonal water which circulates the fresh water in an air and increases both hydrogen concentration (ph) and cation concentration ($H^+$) of the water, thus to readily prepare and supply the potable hexagonal water which is good for the health.

In order to accomplish the above object, a device for preparation and supply of hexagonal water in accordance with a preferred embodiment of the present invention comprises: a fresh water reservoir; a hexagonal water reservoir, the hexagonal water reservoir receiving fresh water supplied from the fresh water reservoir and making the fresh water contact with air and changing the fresh water into the hexagonal water; a connection pipe connecting the fresh water reservoir to the hexagonal water reservoir; a water circulation pump circulating the water in the hexagonal water reservoir so as to make the water contact with the air and changing the water into the hexagonal water, the pump being placed in the interior of the hexagonal water reservoir; and a pump control unit controlling operation of the water circulation pump, the pump control unit being placed on the top of the hexagonal water reservoir.

## BRIEF DESCRIPTION OF THE DRAWINGS

The above and other objects, features and other advantages of the present invention will be more clearly understood from the following detailed description taken in conjunction with the accompanying drawings, in which:

Fig. 1 is a perspective view showing a construction of a hexagonal water preparation and supply device in accordance with a preferred embodiment of the present invention; and

Fig. 2 is a sectional view of the hexagonal water preparation and supply device of the invention taken along the section line A-A of Fig. 1.

## DESCRIPTION OF THE PREFERRED EMBODIMENTS

There have been proposed and used several methods for preparing the hexagonal water. That is, the hexagonal water may be prepared by either cooling the fresh water, magnetizing the fresh water, ionizing the fresh water or alkalizing the fresh water. A preferred embodiment of the invention will use the alkalizing method in preparation of the hexagonal water. However, please noted that the invention may be adapted to the other methods for preparation of hexagonal water.

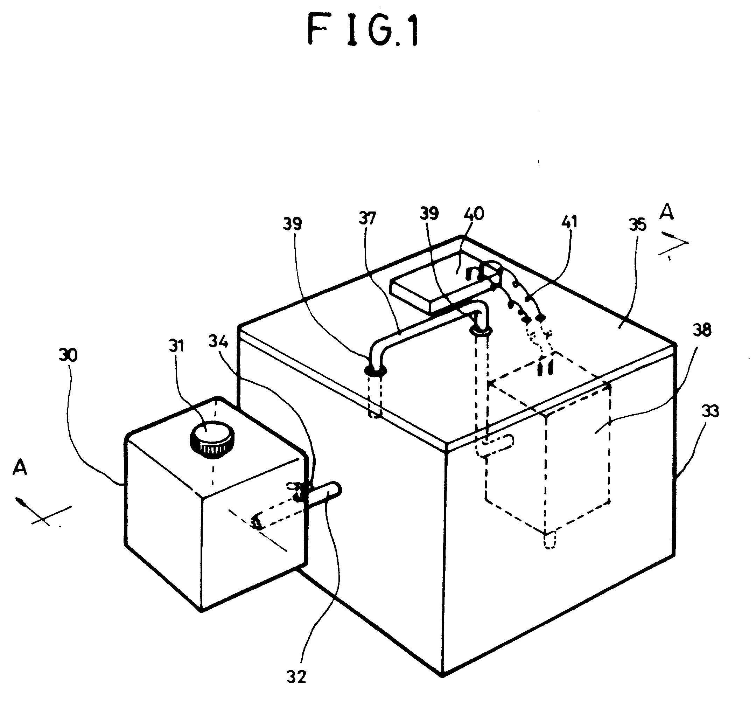

Referring first to Fig. 1, there is shown in a perspective view a construction of a hexagonal water preparation and supply device in accordance with the preferred embodiment of the invention. This hexagonal water preparation and supply device comprises a fresh water reservoir 30 in the right-angled hexahedral shape. The device also includes a hexagonal water reservoir 33 in the right-angled hexahedral shape larger than the fresh water reservoir 30. The fresh water reservoir 30 is connected to the hexagonal water reservoir 33 through a connection pipe 32. Placed in the interior of the hexagonal water reservoir 33 is a water circulation pump 38 which circulates the water in the hexagonal water reservoir 33. A pump control unit 40 for controlling operation of the water circulation pump 38 is placed on the top of the hexagonal water reservoir 33.

In order to charge the fresh water into the fresh water reservoir 30, the top of the reservoir 30 is provided with a fresh water port, which port is engaged with a detachable cap 31. When installing the hexagonal water preparation and supply device, it is preferred to locate the fresh water reservoir 30 on a position higher than the position of the hexagonal water reservoir 33, so that the fresh water of the reservoir 30 is more smoothly supplied to the hexagonal water reservoir 33.

The connection pipe 32 connecting the fresh water reservoir 30 to the hexagonal water reservoir 33 guides the fresh water of the fresh water reservoir 30 to the hexagonal water reservoir 33. The connection pipe 32 is provided with a fresh water supply control valve 34 for controlling the amount of fresh water to be supplied from the fresh water reservoir 30 to the hexagonal water reservoir 33 through the connection pipe 32. The top of the hexagonal water reservoir 33 is covered with a lid 35. The hexagonal water reservoir 33 is also provided with a hexagonal water service port 36 through which the prepared hexagonal water is discharged so as to be served as potable water. The service port 33 is provided on a lower section of a side wall of the hexagonal water reservoir 33.

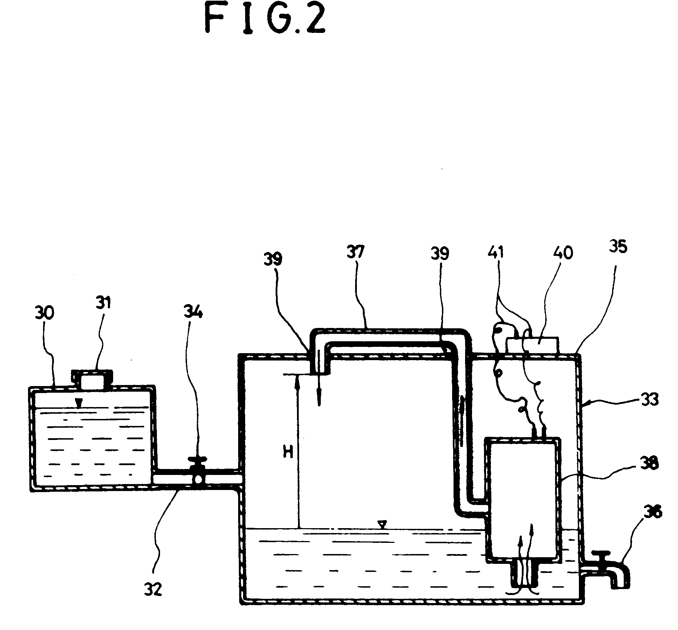

Turning to Fig. 2, there is shown the hexagonal water preparation and supply device of the invention taken along the section line A-A of Fig. 1. The interior of the hexagonal water reservoir 33 is provided with the water circulation pump 38 which forcibly circulates the water in the hexagonal water reservoir 33. The lid 35 of the hexagonal water reservoir 33 is provided with a pair of pipe fitting holes 39 which are spaced out at an interval. A water circulation pipe 37 is tightly fitted in the pipe fitting holes 39 of the lid 35. That is, the water circulation pipe 37 whose one end is connected to the water circulation pump 38 extends in the interior of the hexagonal water reservoir 33. The pipe 37 in turn is upwardly fitted in the first pipe fitting hole 39, so that the pipe projects out of the lid 35 of the hexagonal water reservoir 33. The pipe 37 is, thereafter, double bent into a reversed U-shape and fitted in the second pipe fitting hole 39, so that the other end of the pipe 37 downwardly opens to the interior of the hexagonal water reservoir 33. The water, which is not changed into the hexagonal water yet but circulated in the hexagonal water reservoir 33 by the pumping force of the water circulation pump 38, flows in the water circulation pipe 37.

In designing the device, the water outlet end of the water circulation pipe 37, which water outlet end downwardly opens to the interior of the reservoir 33, is spaced above the water surface inside the reservoir 33 by a height H. With the space between the water outlet end of the pipe 37 and the water surface, the water discharged from the water outlet end of the pipe 37 contacts with the air in the interior of the reservoir 33 until the water reaches the water surface. The pump control unit 40 for controlling operation of the water circulation pump 38 is mounted on the lid 35 of the hexagonal water reservoir 33.

In the drawings, the reference numeral 41 denotes a power supply wire extending between the pump 38 and the pump start controlling unit 40.

The operational theory of the above device will be described hereinbelow.

As shown in Figs. 1 and 2, the cap 31 of the fresh water reservoir 30 is opened and the fresh water supply control valve 34 of the connection pipe 32 is opened. Appropriate amount of fresh water is thus supplied from the fresh water reservoir 30, which reservoir 30 is located on the position higher than the hexagonal water reservoir 33, to the hexagonal water reservoir 33 through the connection pipe 32. At this time, the amount of fresh water to be supplied from the fresh water reservoir 30 to the hexagonal water reservoir 33 may be controlled by handling the fresh water supply control valve 34. When supply of fresh water for the hexagonal water reservoir 33 is finished, the pump control unit 40 starts the water circulation pump 38. The water contained in the hexagonal water reservoir 33 is thus forcibly circulated through the water circulation pipe 37 by the pumping force of the pump 38.

During circulation of the water, the water discharged from the water outlet end of the pipe 37 contacts with the air in the interior of the reservoir 33 until the water reaches the water surface in the reservoir 33. As a result of contact of the water with the air, carbon dioxide $CO_2$ of the water volatilizes into the air, so that the concentration of carbon dioxide $CO_2$ of the water is reduced as represented by the reaction formula $H_2O + CO_2 -> HCO_3^- + H^+$. On the contrary, the cation concentration ($H^+$) as well as the hydrogen concentration ph of the water is increased.

When the water in the hexagonal water reservoir 33 is repeatedly circulated by the pumping force of the pump 38, the cation concentration ($H^+$) as well as the hydrogen concentration ph of the water is increased more and more. Therefore, the conditions capable of changing the molecular structure of the water into the hexagonal ring structure are provided in the water. After lapse of time, which time was preset by handling the pump control unit 40, the majority structure of the water repeatedly circulated in the hexagonal water reservoir 33 becomes the hexagonal ring structure, thus to make the water in the hexagonal water reservoir 33 become the hexagonal water.

After preparation of the hexagonal water through the above procedure, the prepared hexagonal water will be discharged from the hexagonal water service port 36 and served to the user as healthful potable water.

In order to experimentally measure the operational effect of the device of the invention, distilled water, city water, alkaline water and acid water as the fresh waters were separately processed by the device of this invention. The waters were measured in initial hydrogen concentration (ph), fresh water amount, water circulation time, and last hydrogen concentration(ph) after circulation. The measuring results are given in Table 1.

## TABLE 1

| fresh water | $ph^1$ | amount* | time*(min) | $ph^2$ |
|---|---|---|---|---|
| distilled water | 6.9 | 500 cc | 20 | 6.6 |
| city water | 7.2 | 500 cc | 20 | 8.2 |
| alkaline water | 8.3 | 500cc | 20 | 8.5 |
| acid water | 6.3 | 500 cc | 20 | 8.7 |

$ph^1$ : initial ph
amount* : amount of fresh water
time* : water circulation time
$ph^2$ : last ph

From the above Table 1, it is noted that the concentration of carbon dioxide $CO_2$ of the water is higher than that of the air when the fresh water is the city water, the alkaline water or the acid water, so that carbon dioxide $CO_2$ of the water volatilizes into the air and the hydrogen concentration ph of the water is increased after processed by the device of this invention. Particularly, the hydrogen concentration ph of the water is most increased when the fresh water is the acid water. Therefore, the acid water having the hydrogen concentration not higher than ph 7.0 will become hexagonal water having hydrogen concentration higher than ph 8.0 after processed

4

by the device of this invention.

However, when the fresh water is the distilled water, the concentration of carbon dioxide $CO_2$ of the water is lower than that of the air, so that carbon dioxide $CO_2$ of the air is dissolved in the water. In this case, the hydrogen concentration ph of the water is not increased even when the water is processed by the device of this invention.

As described above, a hexagonal water preparation and supply device of the invention circulates fresh water such as city water, alkaline water or acid water by pumping force of a water circulation pump, thus to cause the water to contact with air and to increase the cation concentration ($H^+$) as well as the hydrogen concentration ph of the water. The device of this invention thus readily prepares the potable hexagonal water which is good for the health.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A device for preparation and supply of hexagonal water comprising:
   a fresh water reservoir;
   a hexagonal water reservoir, said hexagonal water reservoir receiving fresh water supplied from the fresh water reservoir and making the fresh water contact with air and changing the fresh water into the hexagonal water;
   a connection pipe connecting the fresh water reservoir to the hexagonal water reservoir;
   a water circulation pump circulating the water in the hexagonal water reservoir so as to make the water contact with the air and changing the water into the hexagonal water, said pump being placed in the interior of said hexagonal water reservoir; and
   a pump control unit controlling operation of the water circulation pump, said pump control unit being placed on the top of the hexagonal water reservoir.

2. The device according to claim 1, wherein the top of the hexagonal water reservoir is provided with a pair of pipe fitting holes spaced out at an interval, and a water circulation pipe extending from the water circulation pump upwardly penetrates one of the pipe fitting holes and is bent and in turn is downwardly inserted into the other pipe fitting hole.

3. The device according to claim 2, wherein a water outlet end of the water circulation pipe is spaced above water surface in the hexagonal water reservoir by a predetermined height.

# F I G.1

# F I G.2

## EUROPEAN SEARCH REPORT

**European Patent Office**

Application Number

EP 94 40 2498

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | DE-U-91 07 597 (MESSER GRIESHEIM GMBH) * page 4, line 18 - page 5, line 23; figure 1 * | 1-3 | C02F1/00 C02F1/64 C02F3/24 |
| A | DE-U-90 11 797 (ENGELHARDT,GERNOT E.) * the whole document * | 1-3 | |
| A | DE-A-29 51 464 (LINDE AG) * figure 1 * | 1-3 | |
| A | CH-A-671 568 (TIBERIU CONSTANTINESCU) * the whole document * | 1-3 | |
| | | | TECHNICAL FIELDS SEARCHED (Int.Cl.6) |
| | | | C02F |

The present search report has been drawn up for all claims

| Place of search | Date of completion of the search | Examiner |
|---|---|---|
| THE HAGUE | 9 March 1995 | Gonzalez Arias, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document